# EUROPEAN PATENT APPLICATION

(11) **EP 4 002 394 A1**
(43) Date of publication of application: **25.05.2022**
(21) Application number: 20306363.1
(22) Date of filing: 12.11.2020
(51) Int. Cl.: H01B 7/282, H01B 13/00

(54) **ASSEMBLAGE FOR BLOCKING WATER**

(71) Applicant: Nexans, 92400 Courbevoie (FR)
(72) Inventor: JOHANSEN, Ben Kristian, 1779 Halden (NO)
(74) Representative: Ipsilon

(57) **Abstract**

The invention concerns a solid ring-conductor assemblage (20) for blocking water from migrating in the axial direction of an electrical stranded conductor (1). The solid ring-conductor assemblage (20) comprises a ring and an electrical stranded conductor, wherein the diameter of an initial opening of the ring exceeds an outer diameter of the stranded conductor (1). The solid ring-conductor assemblage (20) is obtained by the process comprising the following steps:
-placing the ring in an installed position where the electrical stranded conductor (1) runs through the initial opening,
- applying a compressive force (F) onto the ring (2) in the installed position thereby compressing the ring (2) as well as the portion of the electrical stranded conductor (1) as covered by the ring into a compressed state, where the compressed ring and the compressed portion of the electrical stranded conductor bonds as an entity providing the solid ring-conductor assemblage (20).

The invention also concerns_a ring to obtain the solid ring-conductor assemblage, a cable comprising a stranded electrical conductor wherein at least one ring is compressed around the electrical stranded conductor, and a method for manufacturing an electrical stranded conductor arranged with at least one solid ring-conductor assemblage.

## Description

### FIELD OF THE INVENTION

The present invention relates to a solid ring-conductor assemblage for blocking water from migrating in the axial direction of an electrical stranded conductor, a ring to obtain the solid ring-conductor assemblage, a cable comprising a stranded electrical conductor wherein at least one ring is compressed around the electrical stranded conductor, and a method for manufacturing an electrical stranded conductor arranged with at least one solid ring-conductor assemblage.

### BACKGROUND OF THE INVENTION

To effectively convey electrical power from one location to another, an electrical cable must minimize or prevent any degradation in its conductivity caused by water entrance into the cable. High moisture levels inside the electrical cable can have a detrimental effect on the conductive characteristics of the conductor. Depending on the construction of the particular electrical cable, the introduction of moisture can result in a short circuit, an increase in the electrical cable's capacitance, or in the complete failure of the electrical cable.

Water may enter the cable in various ways; through the end portion of the conductor, or through a water passage if the insulation, outer jacket or other protective layers that have been compromised or by other damages that causes water ingress into the conductor.

To solve the problem of damage onto the conductor due to water entering the cable various arrangement are known within the art. In accordance with a known solution a filler compound is inserted in between the strands of the conductor. This arrangement may be supplemented with tape wraps capable of swelling in contact with water. The use of filler compounds and swellable tape wraps may be used in combination or each may be used alone. The existing filler compounds and tape solutions has proven to be insufficient to prevent or limit water exposure to the conductor especially at high water pressure.

Prior art publications disclosing solutions for limiting water entrance into electrical cables include DE29914729, DE826763 and CH533367.

DE29914729 describes the manufacture of a sealing body for sealing the passage of a housing for electrical devices. A brass ring is pressed onto the cable jacket with two protruding flags and serves as anchoring element for the subsequently molded sealing body.

DE826763 discloses a seamlessly pressed pipe, in particular a jacket for electrical cables. A ring-shaped insert for pressing material is described for making an annular chamber for filling with liquid pressed material is shown, into which correspondingly annular pressed material inserts are introduced, the annular chamber is to be used for producing a two-layer cable jacket.

CH533367 discloses a moisture-proof coaxial cable where a central conductor and the outer conductor are connected in a watertight manner, thereby forming a plurality of separate watertight chambers along the cable.

These prior art publications describe solutions for preventing water entrance into the cable by improving the outer insulation jacket or protective layers positioned radially outside the conductor.

As mentioned above existing solutions for protecting the cable by protecting the conductor directly, proposes the solution of inserting filler compound in between the strands of the conductor filler compounds and/or using tape wraps. This solution has proven not to be fully efficient, and there is especially a risk of water entrance at high water pressure.

The object of the present invention is to provide a solution which offers protection for the conductor specifically, aiming to avoid or alleviate the disadvantages of the prior art solutions.

It is further an object of the invention to at least minimize or at best eliminate the entrance of water into the conductor(s) of the cable. In particular, the object is to provide a solution which works advantageously for all depth scenarios, and also at depth with high water pressure.

It is further an additional object of the invention that the solution is simple to manufacture.

### SUMMARY OF THE INVENTION

The present invention concerns a solid ring-conductor assemblage for blocking water from migrating in the axial direction of an electrical stranded conductor, a ring to obtain the solid ring-conductor assemblage, a cable comprising a stranded electrical conductor wherein at least one ring is compressed around the electrical stranded conductor, and a method for manufacturing an electrical stranded conductor arranged with at least one solid ring-conductor assemblage, all of which are defined in the independent claims. Further additional features are set forth in the dependent claims.

The solid ring-conductor assemblage in accordance with the invention is typically to be used in a cable such as a high voltage cable, arranged subsea and/or land, but may also be used on other power or electrical cables. The cable may comprise one or more conductors and an insulation system. A cable used for electric power transmission at high voltage are typically to be fully insulated. This means that they have a full rated insulation system which will consist of insulation, semi-con layers, and a metallic shield.

The present invention concerns a solid ring-conductor assemblage for blocking water from migrating in the axial direction of an electrical stranded conductor. The solid ring-conductor assemblage comprises an electrical stranded conductor and a ring surrounding a portion of the stranded conductor, wherein the ring and the portion of the stranded conductor surrounded by the ring are compressed to form the solid ring-conductor assemblage.

In one aspect of the solid ring-conductor assemblage the diameter of an initial opening of the ring exceeds an outer diameter of the stranded conductor. The solid ring-conductor assemblage is obtained by the process comprising the following steps:
- placing the ring in an installed position where the electrical stranded conductor runs through the initial opening,
- applying a compressive force onto the ring in the installed position thereby compressing the ring as well as the portion of the electrical stranded conductor as covered by the ring into a compressed state, where the compressed ring and the compressed portion of the electrical stranded conductor bonds as an entity providing the solid ring-conductor assemblage.

The solid ring-conductor assemblage may appear as a solid bolt.

The solid ring-conductor assemblage in accordance with the invention may be positioned at or in proximity to the conductor end (and the cable end) for blocking water entrance into the conductor. The solid ring-conductor assemblage may also be positioned further from the conductor end. In this latter case water may intrude into the conductor portion as extending from the cable end to the position of the ring-conductor assemblage, and this portion of the conductor may be damaged, and as such sacrificed while the remaining parts of conductor from the ring-conductor assemblage and onwards is protected from water migration along the conductor length.

In a typical application of the invention more than one ring-conductor assemblage for blocking water migration may be installed on the conductor in order to minimize the risk of damaging water intrusion along the length of the conductor. If water intrusion occurs into a conductor length in between two ring-conductor assemblages, the damage is limited as the water is blocked from migrating through the ring-conductor assemblage.

Applying the compressive force onto the ring may comprise evenly distributing the compressive force around the circumference of the ring thereby compressing the ring and the portion of the electrical stranded conductor as covered by the ring, in a uniform manner.

The compression of the ring may comprise reducing an outer diameter of the ring to correspond essentially to the outer diameter of the uncompressed portions of electrical stranded conductor. The electrical stranded conductor then appears with a uniform outer diameter along its length.

The stranded conductor may typically be provided to display a compressive behaviour when exposed to the compressive force. The conductor is then brought into a permanently deformed compressed stated.

When compressing the portion of the conductor this may comprise reducing the outer diameter of conductor along a length of the electrical stranded conductor as covered by an axial length of the compressed ring.

Further, compressing the portion of the conductor may comprise reducing voids in between strands of the electrical stranded conductor and compacting a radial cross section of each strand along a length of the electrical stranded conductor as covered by the axial length of the compressed ring.

The invention also concerns a ring arranged for being compressed around the electrical stranded conductor to obtain the solid ring-conductor assemblage as described above.

The ring may typically be made of metal, it can be provided in a natural state or annealed. The ring may be provided as a one-piece construction or the ring may be divided into plural ring segments which are to be connected when installing the ring around the conductor. The number of ring segments may be two three or four, or any number of segments chosen according to need.

The inner surface of the ring may be shaped as a sleeve, where the inner walls of the sleeve form the initial ring opening. The ring opening has usually a circular configuration, but other configurations that fits essentially with the cross section of the conductor may be chosen. The exterior surface of the ring may be shaped as a semicircle, polygonal with two, three, four or more as viewed in an axial cross section of the ring, or any other suitable configuration.

The ring should be kept as short as possible to ensure that the bending properties of the conductor is kept at an acceptable level.

Both when being provided as a one-piece construction and in the segmented version, the ring is advantageously quick to install on the conductor and as such provides a cost saving solution.

In accordance with the segmented version of the ring, the ring may comprise plural ring segments that are arranged for being connected to one another to assemble the ring around the conductor. Each ring segment may typically be arranged with a profiled connecting end portion adapted for complementary form-fitting with a profiled connecting end portion of a neighboring ring segment to form a common joint. The form fitting profiles may for instance be provided as a J-shape. The J-shape of one of the connecting end portions of neighboring ring segments may be rotated 180 degree to the other connecting end portion, providing for an engagement with abutting joint surfaces of the complementary J-shaped profile. The form fitting profiles may also be configured as other shapes such as S-shapes, ball shapes or any suitable shape that provides for the bonding of the joining surfaces.

Further, the ring segments may be assembled into a ring by other joining alternatives than form fitting connections such as brazing, welding or other adequate heat-bonding methods.

As mentioned previously, plural rings may be installed and compressed on the stranded electrical conductor to form solid ring-conductor assemblages at predefined intervals, the rings may then be evenly spaced or positioned with varying distances in between. If water should happen to enter the conductor, the solid ring-conductor assemblages will ensure that the water entrance is limited to the conductor length in between two solid ring-conductor assemblage. Or if water enters the end portion, only this end portion of the conductor experiences water entrance while the remaining pars are protected by the solid ring-conductor assemblage. If a cable fault occurs anywhere along the cable length, the cable system operator can plan for removal of a pre-defined length of cable during a cable repair campaign, while the remaining length of cable still has intact solid ring-conductor assemblage (s) for blocking water from migrating in the axial direction of an electrical stranded conductor.

When the ring is provided as a one-piece construction, it is suitable for being stored in a magazine. The magazine may be provided with a storage arrangement comprising a sleeve with a through-going passage for running the conductor through. The sleeve may further be configured to fit into the initial ring openings. The sleeve may be adapted for accommodating the rings on the sleeve by insert of the sleeve through the initial ring opening of each ring. During the manufacturing of the conductor, the conductor may be arranged running in the through-going passage of the sleeve, and a ring may be displaced from its accommodated position on the sleeve onto the conductor where it is placed in the installed position. In this way plural rings may be distributed along the conductor at predefined intervals. A compressive force is applied to each of the individual rings as distributed along the conductor length for compressing the ring and the portion of the conductor covered by the ring into a solid ring-conductor assemblage, as explained previously.

The invention also includes a cable comprising a stranded electrical conductor wherein at least one ring is compressed around the electrical stranded conductor to obtain the solid ring-conductor assemblage as explained above. The cable may comprise plural rings which are compressed around the electrical stranded conductor along a conductor length at predefined intervals.

The cable may comprise one or plural conductors. When the cable comprises plural conductors, these may all be stranded, alternatively the cable may comprise a combination of stranded and solid conductors. Stranded conductors are typically composed of multiple small strands, which group together to make up a single conductor. The stranded conductor has a more flexible characteristics than a solid conductor

Further, the invention also concerns a method for manufacturing an electrical stranded conductor arranged with at least one solid ring-conductor assemblage for blocking water from migrating in the axial direction of the electrical stranded conductor. The solid ring-conductor assemblage comprises a ring and an electrical stranded conductor. The diameter of an initial opening of the ring exceeds an outer diameter of the electrical stranded conductor.

The method comprises the following steps;
- inserting the electrical stranded conductor through the initial opening of the ring,
- positioning the ring in an installation position around the electrical stranded conductor,
- applying a compressive force onto the ring in the installed position thereby compressing the ring as well as the portion of the electrical stranded conductor , into a compressed state where the compressed ring and the compressed portion of the electrical stranded conductor bonds as an entity providing the solid ring-conductor assemblage.

In an aspect of the method for manufacturing an electrical stranded conductor arranged with at least one solid ring-conductor assemblage, the electrical stranded conductor may be arranged with plural solid ring-conductor assemblages distributed at predefined intervals along the length of the electrical stranded conductor. The method may comprise repeating the method steps as mentioned above.

In an aspect of the method for manufacturing an electrical stranded conductor arranged with at least one solid ring-conductor assemblage, the electrical stranded conductor may be arranged with plural solid ring-conductor assemblages distributed at predefined intervals along the length of the electrical stranded conductor. The plural rings may be accommodated in a magazine comprising a storage sleeve, and the method comprises the further steps of
- running the storage sleeve through the initial openings of the rings and thereby accommodating the plural rings on the storage sleeve,
- running an electrical stranded conductor in a through-going passage of the storage sleeve and in a repeating manner conducting the following steps;
- displacing a ring from the storage sleeve into the installed position on the electrical stranded conductor,
- applying a compressive force onto the ring in the installed position thereby compressing the ring as well as the portion of the electrical stranded conductor, as covered by the ring, into a compressed state where the compressed ring and the compressed portion of the electrical stranded conductor bonds as an entity providing the solid ring-conductor assemblage.

Applying the compressive force to the ring for compressing the ring and at least portions of the conductor into an-solid ring-conductor assemblage may be conducted in various ways. The compressive force may typically be distributed around the circumference of the ring in a uniform manner as mentioned previously. The working direction of the compressive force may then be oriented essentially radially onto the ring.

The compressive force may typically be provided by a pressing machine or other tools or mechanical devices capable of providing compressing forces around the ring. The pressing machine may comprise a segmented tool for instance two tool parts arranged for engagement at radially opposite exterior surfaces of the ring. Alternatively, the segmented tool may comprise four tool parts. The tool may typically be configured for fitting in engagement with the specific design of the exterior surfaces of the ring, and ensures that the compressive force F is distributed equally all around the outer circumference of the ring.

These and other characteristics of the invention will be clear from the following description of an exemplary embodiment, given as a non-restrictive example, with reference to the attached drawings.

### DETAILED DESCRIPTION

In the following, embodiments of the present invention will be described in detail with reference to the enclosed drawings, where:
Fig. 1 shows a perspective view of a segmented ring to be installed around a conductor.
Fig. 2 shows a perspective view of the initial step of joining the ring segments.
Fig. 3 shows a perspective view of the ring segments as joined in an installed position.
Fig. 4 shows a side view of the ring segments as shown in fig. 3
Fig. 5 shows a perspective view of the ring in a compressed state around the conductor.
Fig. 6 shows a side view of the compressed ring as shown in fig. 5
Fig. 7 shows a perspective view of a plural rings stored in a magazine installed around an electrical stranded conductor.
Fig. 8 shows a perspective view of a ring as distributed from the magazine of fig. 7 onto the electrical stranded conductor.
Fig. 9 shows a perspective view of the ring as distributed from the magazine as shown in fig 8 and brought into a compressed stated around the electrical stranded conductor.
Fig. 10 shows a front view of a pressing machine compressing one of rings stored in a magazine as shown in fig 7-9.
Fig. 11 shows the pressing machine of fig 10 compressing a ring as distributed from magazine of figs 7-9, the pressing machine is shown in cross section along B-B as shown in fig 10.
Fig. 12 shows a top view of the compression of the ring by the pressing machine as illustrated in fig 11.
Fig. 13 shows a perspective view of the compression of the ring by the pressing machine as illustrated in fig 11.

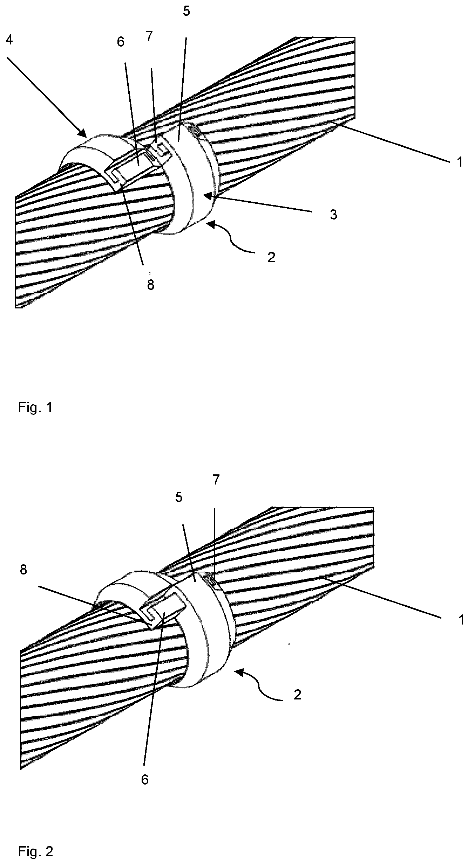

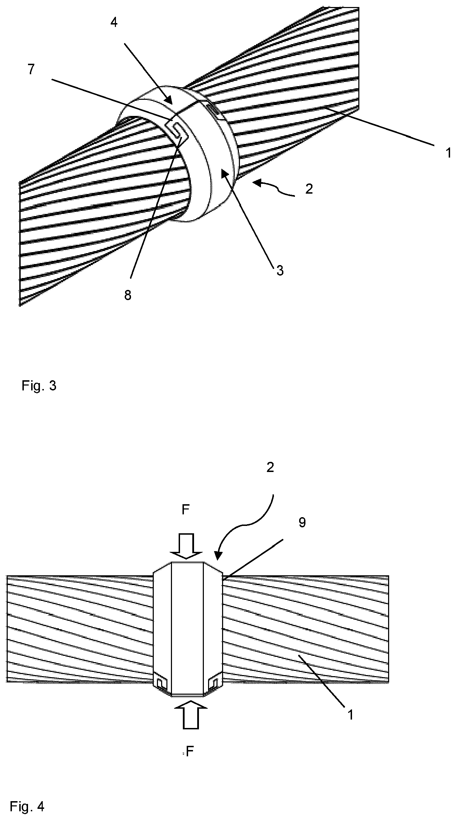

Fig. 1 shows a ring 2 in accordance with the invention which is to be arranged in an installed position around a stranded electrical conductor 1. In the embodiment shown figure 1, the ring 2 is divided into two ring segments 3, 4 each having connecting end portions 5,6 configured for being joined to make up the ring 2. The connecting end portions 5,6 have complementary form-fitting profiles 7, 8 for forming a common joint when brought into the installed position as shown in fig. 3. In the figs 1-3 the form fitting profiles 7, 8 are both shown J-shaped each being arranged with an orientation to provide for an engagement with abutting joint surfaces of the complementary J-shaped profile. In fig 1 the ring segments 3, 4 are positioned side by side ready for being displaced into the initial step of joining the ring segments into a ring. The form fitting profiles 7, 8 extend all along the connecting end portions 5,6 in the axial direction and this configuration permits sliding the form fitting profiles 7, 8 axially along the conductor into forming the common joint.

Only one connecting end portion 5,6 of each ring segment 3, 4 is visible in the example shown fig 1, the other connecting end portions are placed diametrically opposite to the shown position end portions and have a similar configuration for making up the joint. The shown ring segments 2,3 are of equal size, but the ring segments 2 may also be provided with different size. The ring 2 may be divided into more than the two shown ring segments for instance three or four, or a number of segments chosen according to need. The ring segments may be provided with uniform or varying size. The ring segments may typically be provided with a uniform axial cross section, and may have the same or different circumferential extensions.

Fig. 2 shows the initial insert of one connecting end portion 5 into the other connecting end portion 6 by carrying out a joining movement in the axial direction of the electrical stranded conductor 1. By this initial insert, the form-fitting profiles 7, 8 are brought into alignment and the abutting joint surfaces of the form-fitting profiles 7, 8 slides the ring segments 2, 3 into engagement with each other. The ring segments 2,3 continues being displaced relative each other until being brought into the common joint making up the ring 2 as shown in figs 3 and 4. The ring 2 is here shown in the intstalled position around the conductor.

The opening 9 of the ring 2 has a diameter that exceeds the diameter of the conductor 1. In the embodiment as shown in figs 1-4, the diameter of the opening 9 of the ring 2 is determined so that it corresponds with the diameter of the conductor for the ring to fit onto the electrical stranded conductor 1 with minimum clearance.

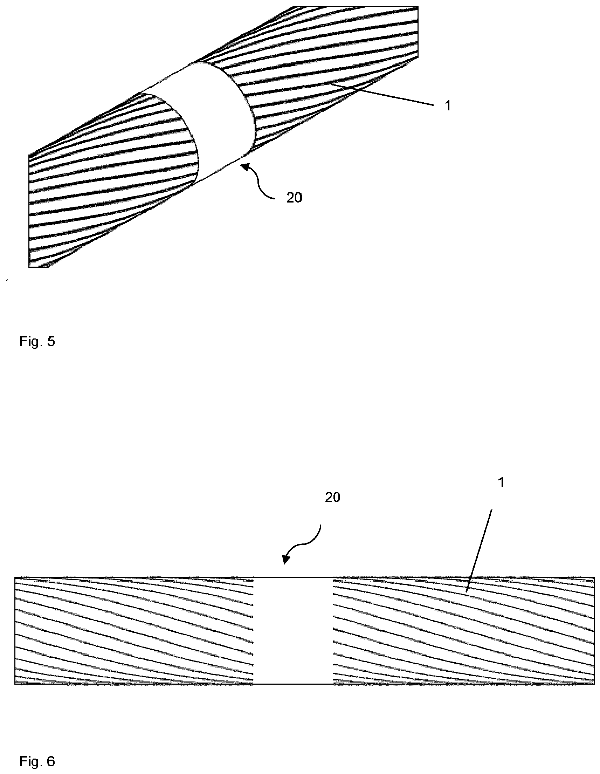

With the ring 2 being placed in the installed position around the electrical stranded conductor 1 as shown in figs 3 and 4, the ring is now prepared for being subjected to a compressive force F. The compressive force F causes the compression of the ring 2 into a compressed configuration as shown in fig 5 and 6. This compression also forces a portion of the conductor as covered by the ring into a compressed state. The compression of the portion of the conductor 1 as covered by the ring 2 allows the compression of the stranded conductor to reduce voids in between the strands and compact the radial cross section of each strand. The compressed ring 2 and the portion of the conductor as covered by the ring thereby appears as a solid ring-conductor assemblage 20 similar to a solid bolt.

The diameter of the compressed ring 2 corresponds essentially to the diameter of the electrical stranded conductor 1, as illustrated in figs 5 and 6. The solid ring-conductor assemblage 20 exhibits water blocking qualities. When being part of an end portion of an electrical stranded conductor arranged in a cable, this assemblage will thereby be capable of limiting the water intrusion into the conductor.

Plural rings may be at arranged at pre-defined intervals along the length of the conductor, such that if a cable fault occurs anywhere along the cable, the cable system operator can plan for removal of a pre-defined length of cable during a cable repair campaign.

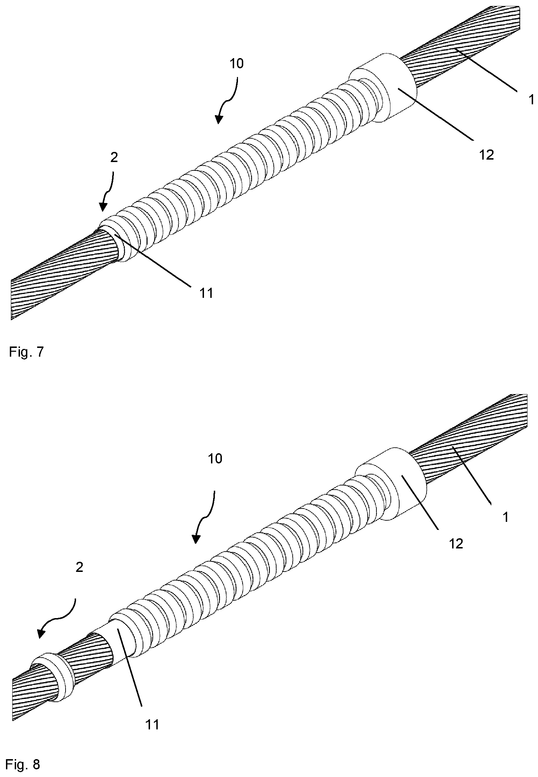

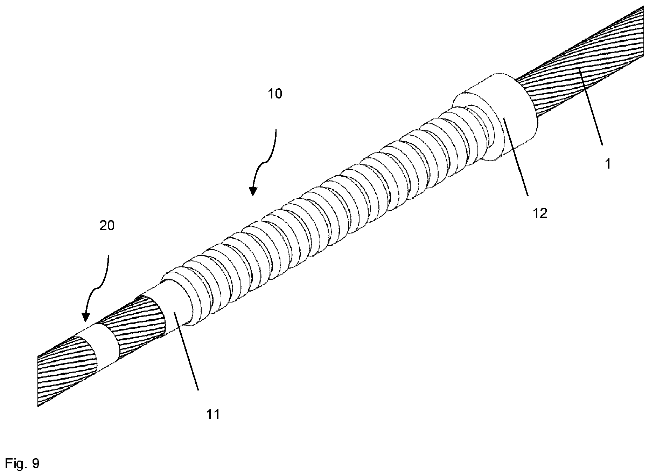

As an alternative to the segmented ring 2 as shown in fig 1-4, the ring 2 may be provided as one-piece construction as illustrated in figs 7-8. These figures show an embodiment where plural rings are stored in a magazine 10. The capacity of the magazine is regulated in accordance with planned cable length and the number of rings to be installed on the electrical stranded conductor. The magazine 10 has a storage arrangement comprising a sleeve 11 with a through-going passage for the electrical stranded conductor 1. The sleeve runs through the ring openings 9 and thereby accommodates the ring on the sleeve 11. An end stop unit 12 ensures that the stored rings 2 are kept accommodated in place on the sleeve 11. The electrical stranded conductor runs through the magazine during the manufacturing of the electrical stranded conductor 1 and a ring 2 is moved from its accommodated position on the sleeve 11 onto the electrical stranded conductor 1 where it is placed in the installed position. A compressive force F is applied to the individual ring 2 for compressing the ring 2 into a compressed configuration similar to description above of the illustrations in fig 5 and 6. The compressed ring is shown in fig 9. The ring may be installed and compressed at pre-defined intervals according to need as described above.

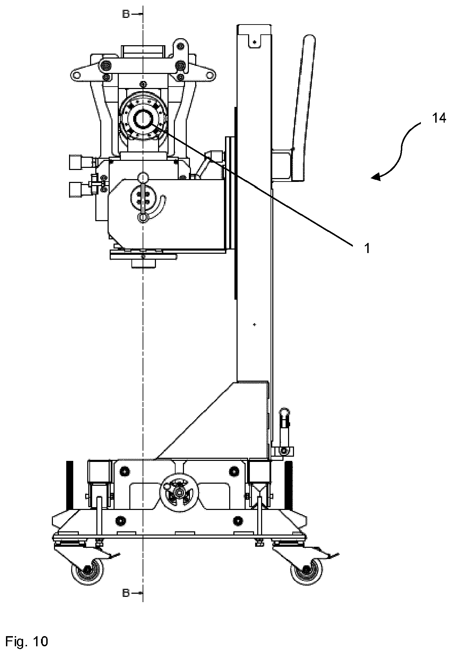

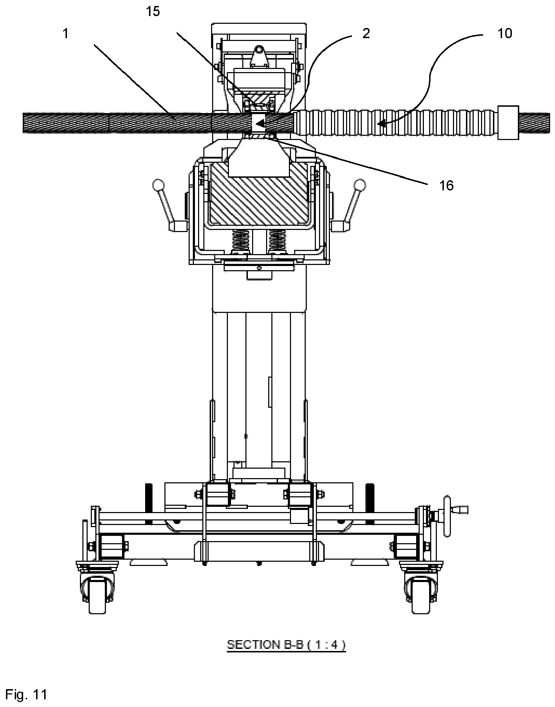

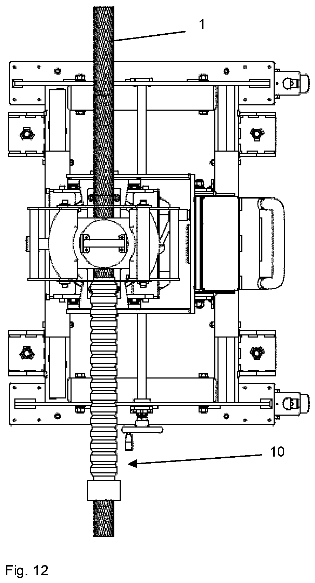

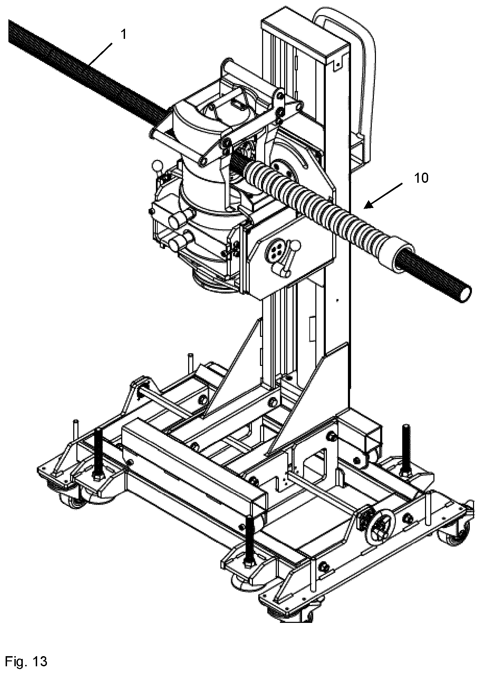

As shown in fig 4, the compressive force F has a working direction essentially radially on the ring 2, both when the ring 2 is segmented and when being provided in one-piece. This compressive force F may be provided by a by a pressing machine 14 as shown in figs 10-13. The pressing machine 14 may be a standard off the shelf tool where the segmented tool has been given a configuration to fit with the specific exterior of the ring 2. The pressing machine may also be designed and manufactured specifically fit for purpose. The pressing machine moves the segmented tool in at least one direction, essentially radially with respect to the ring 2 and by this movement applies a mechanical force F such that the ring 2 is compressed and essentially corresponds to the diameter of the conductor. The pressing machine 14 as shown in these figures comprises a segmented tool comprising four tool parts, illustrated by tool parts 15, 16 as shown in fig 11. These four tool parts ensures even distribution of the necessary compression force F onto the ring 2. The pressing machine 14 may be provided with a number of tool parts that correspond with the number of ring segments, for instance two tool parts for the two segmented ring 2. The tool comprising two or four tool parts may also be applicable for pressing the one-piece ring into a compressed state. The tool parts are configured for fitting in engagement with specific design of the exterior surfaces of the ring 2, and ensures that the compressive force F is distributed equally all around the outer circumference of the ring 2.

## Claims

1. A solid ring-conductor assemblage (20) for blocking water from migrating in the axial direction of an electrical stranded conductor (1) comprising an electrical stranded conductor (1) and a ring surrounding a portion of the stranded conductor, wherein the ring and the portion of the stranded conductor surrounded by the ring are compressed to form the solid ring-conductor assemblage.

2. Solid ring-conductor assemblage (20) according to claim 1, wherein the diameter of an initial opening of the ring exceeds an outer diameter of the stranded conductor (1) and the solid ring-conductor assemblage (20) is obtained by
- placing the ring in an installed position where the electrical stranded conductor (1) runs through the initial opening,
- applying a compressive force (F) onto the ring (2) in the installed position thereby compressing the ring (2) as well as the portion of the electrical stranded conductor (1).

3. Solid ring-conductor assemblage (20) according to claim 1 or 2, wherein the compressing of the ring (2) comprises reducing an outer diameter of the ring (2) to correspond essentially to the outer diameter of an uncompressed portions of electrical stranded conductor (1).

4. Solid ring-conductor assemblage (20) according to one of the claims 1-3, wherein compressing the portion of the conductor (1) comprises reducing the outer diameter of conductor (1) along a length of the electrical stranded conductor as covered by an axial length of the compressed ring (2).

5. Solid ring-conductor assemblage (20) according to one of the claims 1-4, wherein compressing the portion of the conductor (1) comprises reducing voids in between strands of electrical stranded conductor and compacting an radial cross section of each strand along a length of the electrical stranded conductor as covered by the axial length of the compressed ring (2).

6. Solid ring-conductor assemblage (20) according to one of the claims 1-5, wherein evenly distributing the compressive force (F) around the circumference of the ring thereby compressing the ring (2) and the portion of the electrical stranded conductor in a uniform manner.

7. A ring arranged for being compressed around the electrical stranded conductor to obtain the solid ring-conductor assemblage (20) according to one of the claims 1-6.

8. Ring according to claim 7, wherein the ring (2) is provided as a one-piece construction.

9. Ring according to claim 7, wherein the ring (2) comprises plural ring segments (3,4) arranged for being connected to one another to assemble the ring (2) around the conductor (1).

10. Ring according to claim 9, wherein each ring segment (3) comprises a profiled connecting end portion (5) adapted for complementary form-fitting with a profiled connecting end portion (6) of a neighboring ring segment (4) to form a common joint.

11. A cable comprising a stranded electrical conductor wherein at least one ring is compressed around the electrical stranded conductor to obtain the solid ring-conductor assemblage (20) in accordance with claim 1-6.

12. Cable in accordance with claim 11, wherein plural rings are compressed around the electrical stranded conductor along a conductor length at predefined intervals.

13. Method for manufacturing an electrical stranded conductor arranged with at least one solid ring-conductor assemblage (20) for blocking water from migrating in the axial direction of the electrical stranded conductor, wherein the solid ring-conductor assemblage (20) comprises a ring (2) and an electrical stranded conductor (1), and wherein the diameter of an initial opening of the ring exceeds an outer diameter of the electrical stranded conductor (1) and the method comprises the following steps of;
- inserting the electrical stranded conductor (1) through the initial opening of the ring (2),
- positioning the ring (2) in an installation position around the electrical stranded conductor (1),
- applying a compressive force (F) onto the ring (2) in the installed position thereby compressing the ring (2) as well as the portion of the electrical stranded conductor (1), into a compressed state where the compressed ring and the compressed portion of the electrical stranded conductor bonds as an entity providing the solid ring-conductor assemblage (20).

14. Method for manufacturing an electrical stranded conductor arranged with plural solid ring-conductor assemblages (20) distributed at predefined intervals along the length of the electrical stranded conductor, comprising repeating the method steps of claim 13.

15. Method for manufacturing the electrical stranded conductor plural solid ring-conductor assemblages (20) in accordance with claim 14, wherein plural rings (2) are accommodated in a magazine (10) comprising a storage sleeve (11), wherein the method comprising the steps of
- running the storage sleeve (11) through the initial openings of the rings (2) and thereby accommodating the plural rings (2) on the storage sleeve (11),
- running the electrical stranded conductor (1) in a through-going passage of the storage sleeve (11) and in a repeating manner conducting the following steps;
- displacing a ring (2) from the storage sleeve (11) into the installed position on the electrical stranded conductor (1),
- applying a compressive force (F) onto the ring (2) in the installed position thereby compressing the ring (2) as well as the portion of the electrical stranded conductor (1) as covered by the ring, into a compressed state where the compressed ring and the compressed portion of the electrical stranded conductor bonds as an entity providing the solid ring-conductor assemblage (20).
